# EUROPEAN PATENT APPLICATION

(11) **EP 4 637 004 A1**
(43) Date of publication of application: **22.10.2025**
(21) Application number: 23903160.2
(22) Date of filing: 09.11.2023
(51) Int. Cl.: H02K 17/16

(54) **ROTOR, ROTOR CORE, INDUCTION MOTOR, AND DESIGN METHOD FOR INDUCTION MOTOR**

(30) Priority: 12.12.2022 JP 2022197759
(71) Applicant: NIPPON STEEL CORPORATION, Chiyoda-ku Tokyo 100-8071 (JP)
(72) Inventor: HONMA, Rei, Tokyo 100-8071 (JP)
(74) Representative: Vossius & Partner Patentanwälte Rechtsanwälte mbB
(86) International application number: PCT/JP2023/040430
(87) International publication number: WO 2024/127862

(57) **Abstract**

A rotor includes a rotor core (31) and a plurality of secondary conductors (32) disposed in the rotor core (31) at an interval in a circumferential direction of the rotor core (31), a plurality of insertion holes (34) into which the secondary conductors (32) are inserted are formed in the rotor core (31), a slot (35) open to an outside in the radial direction is provided outside each secondary conductor (32) of the rotor core (31) in a radial direction of the rotor core (31), the secondary conductor (32) is exposed to the outside in the radial direction through the slot (35), the rotor core (31) includes a pair of end surfaces (36, 37) provided so as to face each other with the slot (35) interposed therebetween in the circumferential direction, at least one of each secondary conductor (32) or each insertion hole (34) has a shape symmetrical in the circumferential direction with respect to a reference line (Lc) defined so as to intersect a center axis of the rotor core (31) and pass through a center of the secondary conductor (32) in the circumferential direction, and the pair of end surfaces (36, 37) are asymmetrical in the circumferential direction with respect to the reference line (Lc).

## Description

### TECHNICAL FIELD

The present invention relates to a rotor, a rotor core, an induction motor, and a method of designing an induction motor.

Priority is claimed on Japanese Patent Application No. 2022-197759, filed December 12, 2022, the content of which is incorporated herein by reference.

### BACKGROUND ART

Induction motors have been conventionally known that are, for example, described in Patent Documents 1 to 3 below.

The induction motor of Patent Document 1 is configured to increase the starting torque and improve the efficiency at the time of normal operation, with a rotator in which a double squirrel-cage secondary conductor is formed.

The induction motor of Patent Document 2 is configured to receive a centrifugal force on a surface by distorting the cross-sectional shape of a secondary conductor to enable high-speed rotation drive.

The induction motor of Patent Document 3 is configured to ensure cooling performance with a vent provided in the axial direction, and includes a rotor in which a slot is formed.

### Citation List

### Patent Documents

Patent Document 1: PCT International Publication No. WO 2009-093345
Patent Document 2: Japanese Unexamined Patent Application, First Publication No. 2015-35870
Patent Document 3: Japanese Unexamined Patent Application, First Publication No. 2020-10510

### SUMMARY OF INVENTION

### Technical Problem

Improvement in torque is generally awaited in induction motors. Note that for the induction motors of Patent Documents 1 to 3, Patent Documents 1 to 3 do not disclose the relationship between the shape of a slot formed on the outside of the secondary conductor in the radial direction and the improvement in torque.

The present invention has been made in view of the above circumstances, and an object is to improve torque by shape change of a slot.

### Solution to Problem

<1> A rotor according to an aspect of the present invention includes a rotor core and a plurality of secondary conductors disposed in the rotor core at an interval in a circumferential direction of the rotor core, the rotor core includes a plurality of insertion holes formed so as to penetrate the rotor core in an axial direction of the rotor core and into the insertion holes, the secondary conductors are inserted, the rotor core includes a slot provided in a portion positioned outside each of the secondary conductors in a radial direction of the rotor core and the slot is open to an outside in the radial direction, each of the secondary conductors is exposed to the outside in the radial direction through the slot, the rotor core includes a pair of end surfaces provided so as to face each other with the slot interposed between the pair of end surfaces in the circumferential direction, at least one of each of the secondary conductors or each of the insertion holes has a shape symmetrical in the circumferential direction with respect to a reference line defined so as to intersect a center axis of the rotor core and pass through a center of each of the secondary conductors in the circumferential direction, and the pair of end surfaces are asymmetrical in the circumferential direction with respect to the reference line.
<2> A rotor core according to an aspect of the present invention is a rotor core for an induction motor, the rotor core includes: a plurality of insertion holes formed so as to penetrate the rotor core in an axial direction of the rotor core, the insertion holes into which a secondary conductor is inserted; a slot provided in a portion positioned outside each of the insertion holes in a radial direction of the rotor core, the slot open to an outside in the radial direction of the rotor core; and a pair of end surfaces provided so as to face each other with the slot interposed between the pair of end surfaces in a circumferential direction of the rotor core, each of the insertion holes is symmetrical in the circumferential direction with respect to a reference line defined so as to intersect a center axis of the rotor core and pass through a center of each of the insertion holes in the circumferential direction, and the pair of end surfaces are asymmetrical in the circumferential direction with respect to the reference line.
<3> An induction motor according to an aspect of the present invention includes: a stator being annular; and the rotor described in <1> above disposed in the stator.
<4> In the induction motor according to <3> above, θf may satisfy 0 ≤ θf ≤ 0.45θs, and θb may satisfy -0.8θf ≤ θb < 0 when θf satisfies 0 ≤ θf ≤ 0.25θs and θb may satisfy θf - 0.45θs ≤ θb < 0 when θf satisfies 0.25θs < θf ≤ 0.45θs wherein θf represents a separation angle of a rotation front end portion of the slot with respect to a rotation front reference location of each of the secondary conductors toward a rotation front, and θb represents a separation angle of a rotation rear end portion of the slot with respect to a rotation rear reference location of each of the secondary conductors toward a rotation rear.

The rotation front reference location is a point where a straight line intersects an outer circumference circle of the rotor core, and the straight line bisects a central angle formed by the reference line with a straight line intersecting the center axis and passing through an end portion of a side surface of each of the secondary conductors on a rotation front side on an outside in a radial direction, and intersects the center axis of the rotor core. The rotation front end portion is an end portion of an end surface of the pair of end surfaces on a rotation front side on an outside in a radial direction. The rotation rear reference location is a point where a straight line intersects the outer circumference circle of the rotor core, and the straight line bisects a central angle formed by the reference line with a straight line intersecting the center axis and passing through an end portion of a side surface of each of the secondary conductors on a rotation rear side on an outside in a radial direction, and intersects the center axis of the rotor core. The rotation rear end portion is an end portion of an end surface of the pair of end surfaces on a rotation rear side on an outside in a radial direction.

Here, θs satisfies θs = 360 [deg]/Nslot wherein Nslot means a number of slots of the stator.

<5> In the induction motor according to <3> above, θb may satisfy 0 ≤ θb ≤ 0.5θs, and θf may satisfy -0.45θb ≤ θf ≤ 0 when θb satisfies 0 ≤ θb < 0.45θs and θf may satisfy 4θb - 20s ≤ θf ≤ 0 when θb satisfies 0.45θs ≤ θb ≤ 0.5θs wherein θf represents a separation angle of a rotation front end portion of the slot with respect to a rotation front reference location of each of the secondary conductors toward a rotation front, and θb represents a separation angle of a rotation rear end portion of the slot with respect to a rotation rear reference location of each of the secondary conductors toward a rotation rear.

The rotation front reference location is a point where a straight line intersects an outer circumference circle of the rotor core, and the straight line bisects a central angle formed by the reference line with a straight line intersecting the center axis and passing through an end portion of a side surface of each of the secondary conductors on a rotation front side on an outside in a radial direction, and intersects the center axis of the rotor core. The rotation front end portion is an end portion of an end surface of the pair of end surfaces on a rotation front side on an outside in a radial direction. The rotation rear reference location is a point where a straight line intersects the outer circumference circle of the rotor core, and the straight line bisects a central angle formed by the reference line with a straight line intersecting the center axis and passing through an end portion of a side surface of each of the secondary conductors on a rotation rear side on an outside in a radial direction, and intersects the center axis of the rotor core. The rotation rear end portion is an end portion of an end surface of the pair of end surfaces on a rotation rear side on an outside in a radial direction.

Here, θs satisfies θs = 360 [deg]/Nslot wherein Nslot means a number of slots of the stator.

<6> In the induction motor according to <3> above, θf may satisfy 0 ≤ θf ≤ 0.45θs, and θb may satisfy -0.8θf ≤ θb when θf satisfies 0 ≤ θf ≤ 0.25θs, θb may satisfy - 0.25θs ≤ θb when θf satisfies 0.25θs < θf ≤ 0.35θs, and θb may satisfy 2θf - 0.9θs ≤ θb when θf satisfies 0.35θs < θf ≤ 0.45θs wherein θf represents a separation angle of a rotation front end portion of the slot with respect to a rotation front reference location of each of the secondary conductors toward a rotation front, and θb represents a separation angle of a rotation rear end portion of the slot with respect to a rotation rear reference location of each of the secondary conductors toward a rotation rear.

The rotation front reference location is a point where a straight line intersects an outer circumference circle of the rotor core, and the straight line bisects a central angle formed by the reference line with a straight line intersecting the center axis and passing through an end portion of a side surface of each of the secondary conductors on a rotation front side on an outside in a radial direction, and intersects the center axis of the rotor core. The rotation front end portion is an end portion of an end surface of the pair of end surfaces on a rotation front side on an outside in a radial direction. The rotation rear reference location is a point where a straight line intersects the outer circumference circle of the rotor core, and the straight line bisects a central angle formed by the reference line with a straight line intersecting the center axis and passing through an end portion of a side surface of each of the secondary conductors on a rotation rear side on an outside in a radial direction, and intersects the center axis of the rotor core. The rotation rear end portion is an end portion of an end surface of the pair of end surfaces on a rotation rear side on an outside in a radial direction.

Here, θs satisfies θs = 360 [deg]/Nslot wherein Nslot means a number of slots of the stator.

<7> In the induction motor according to <3> above, θb may satisfy 0 ≤ θb ≤ 0.5θs, and θf may satisfy -0.80b ≤ θf when θb satisfies 0 ≤ θb ≤ 0.25θs and θf may satisfy -0.2θs ≤ θf when θb satisfies 0.25θs < θb ≤ 0.5θs wherein θf represents a separation angle of a rotation front end portion of the slot with respect to a rotation front reference location of each of the secondary conductors toward a rotation front, and θb represents a separation angle of a rotation rear end portion of the slot with respect to a rotation rear reference location of each of the secondary conductors toward a rotation rear.

The rotation front reference location is a point where a straight line intersects an outer circumference circle of the rotor core, and the straight line bisects a central angle formed by the reference line with a straight line intersecting the center axis and passing through an end portion of a side surface of each of the secondary conductors on a rotation front side on an outside in a radial direction, and intersects the center axis of the rotor core. The rotation front end portion is an end portion of an end surface of the pair of end surfaces on a rotation front side on an outside in a radial direction. The rotation rear reference location is a point where a straight line intersects the outer circumference circle of the rotor core, and the straight line bisects a central angle formed by the reference line with a straight line intersecting the center axis and passing through an end portion of a side surface of each of the secondary conductors on a rotation rear side on an outside in a radial direction, and intersects the center axis of the rotor core. The rotation rear end portion is an end portion of an end surface of the pair of end surfaces on a rotation rear side on an outside in a radial direction.

Here, θs satisfies θs = 360 [deg]/Nslot wherein Nslot means a number of slots of the stator.

<8> A method of designing an induction motor according to an aspect of the present invention is a method of designing the induction motor described in any one of <3> to <7> above, and the method includes calculating a magnetic flux in the induction motor according to positions of the pair of end surfaces, a number of stator slots formed in the stator, and a number of the secondary conductors, and designing the induction motor on the basis of a calculation result.

An induction motor obtains a torque by a Lorentz force that is generated from a magnetic flux due to a stator current, and from a secondary current generated in a secondary conductor of a rotor due to a temporal change of the magnetic flux. The Maxwell stress between the rotor and the stator also contributes to the torque. An induction motor needs to generate an induction current in a secondary conductor, and therefore the frequency of the stator current and the rotor rotation frequency are different. That is, the relative positional relationship between the rotor and the stator magnetic field temporally changes. Therefore, in the related art, there is almost no example of improving characteristics by changing the slot shape. There is an example of partially changing the secondary conductor shape, but there is no example of improving characteristics by a slot.

For the purpose of improving the torque in an induction motor having this structure, the present inventors conducted analysis based on the contents described in Japanese Unexamined Patent Application, First Publication No. 2021-114099, and thus studied optimization of the rotor shape. As a result, it has been suggested that the torque can be improved by adding, in addition to a slot, new flux barriers on both sides of the secondary conductor. As a result of further studies, it has been confirmed that the torque is further improved by opening a new flux barrier on the outer circumference of the rotor core. As a result, it has been suggested that improvement in torque can be achieved by simply changing the opening position of the existing slot rather than by adding a new flux barrier.

The torque of an induction motor is constituted by the Lorentz force received by the current of the secondary conductor and the Maxwell stress due to the magnetic flux generated from the secondary current, and the ratio of the Maxwell stress is generally large. Therefore, it is considered that if the opening position of the slot is changed to change the conduction path between the secondary current magnetic flux and the stator magnetic flux, the Maxwell stress is particularly increased to improve the torque of the induction motor.

### Advantageous Effects of Invention

According to the present invention, torque can be improved by changing the slot shape.

### BRIEF DESCRIPTION OF DRAWINGS

[FIG. 1] A view that illustrates an induction motor according to Reference Example of the present invention, and is a plan view including a partial cross section.
[FIG. 2] A schematic view illustrating a rear reference location and a front reference location of a rotor included in the induction motor illustrated in FIG. 1.
[FIG. 3] A schematic view illustrating a separation angle in an embodiment of the present invention.
[FIG. 4] A view from the side in the case of a rotor core that is a laminated core.
[FIG. 5] A view that illustrates an induction motor according to First Example of First Embodiment of the present invention, and is a plan view including a partial cross section.
[FIG. 6] An enlarged plan view of a rotor included in the induction motor illustrated in FIG. 5.
[FIG. 7] A schematic view illustrating a separation angle illustrated in FIG. 6.
[FIG. 8] A view that illustrates an induction motor according to Second Example of First Embodiment of the present invention, and is a plan view including a partial cross section.
[FIG. 9] An enlarged plan view of a rotor included in the induction motor illustrated in FIG. 8.
[FIG. 10] A diagram illustrating an analysis result of a magnetic flux of the induction motor of Reference Example illustrated in FIG. 1.
[FIG. 11] A diagram illustrating an analysis result of a magnetic flux of the induction motor of First Example illustrated in FIG. 6.
[FIG. 12] A diagram illustrating an analysis result of a magnetic flux of the induction motor of Reference Example illustrated in FIG. 1.
[FIG. 13] A diagram illustrating an analysis result of a magnetic flux of the induction motor of Second Example illustrated in FIG. 9.
[FIG. 14] A graph illustrating increase rates of torque with respect to a position change of a slot in the induction motor of First Example illustrated in FIG. 6.
[FIG. 15] A graph illustrating increase rates of torque with respect to a position change of a slot in the induction motor of Second Example illustrated in FIG. 9.
[FIG. 16] A graph illustrating an increase range of torque with respect to a position change by a slot in an induction motor according to First Embodiment of the present invention.
[FIG. 17] A graph illustrating an increase range of torque with respect to a position change by a slot in an induction motor according to Second Embodiment of the present invention.
[FIG. 18] A graph illustrating a difference in an increase range of torque by a slot of the rotor illustrated in FIG. 9 between an induction motor of First Embodiment and an induction motor of Second Embodiment.
[FIG. 19] A diagram illustrating an analysis result of a magnetic flux of an induction motor of Second Embodiment including the rotor illustrated in FIG. 9.
[FIG. 20] A diagram illustrating an analysis result of a magnetic flux of an induction motor of First Embodiment including the rotor illustrated in FIG. 9.
[FIG. 21] A graph illustrating a difference in an increase range of torque by a slot of the rotor illustrated in FIG. 6 between an induction motor of First Embodiment and an induction motor of Second Embodiment.
[FIG. 22] A diagram illustrating an analysis result of a magnetic flux of an induction motor of Second Embodiment including the rotor illustrated in FIG. 6.
[FIG. 23] A diagram illustrating an analysis result of a magnetic flux of an induction motor of First Embodiment including the rotor illustrated in FIG. 6.

### DESCRIPTION OF EMBODIMENTS

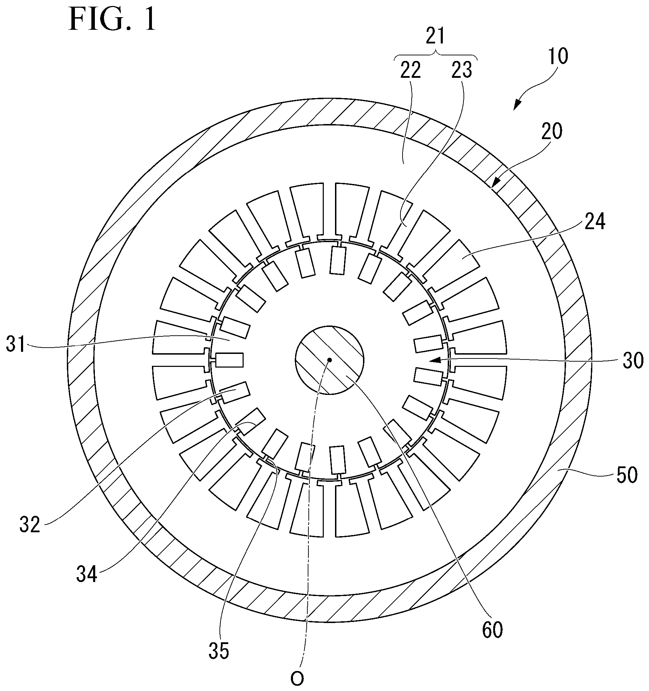

Hereinafter, a rotor, an induction motor, and a method of designing an induction motor according to an embodiment of the present invention will be described with reference to FIGS. 1 to 23. The induction motor is suitably used in, for example, an electric vehicle. The induction motor is described as First Embodiment in a case where the induction motor uses an ordinary material in a stator core 21 and a rotor core 31, and as Second Embodiment in a case where the induction motor uses a high Bs material in the stator core 21 and the rotor core 31. The ordinary material is, for example, a steel sheet having a saturation magnetic flux density Bs satisfying Bs < 2.0 T. The high Bs material is, for example, a steel sheet having a saturation magnetic flux density Bs satisfying Bs ≥ 2.0 T.

### [Basic Configuration of Induction Motor (Reference Example)]

First, a basic configuration of an induction motor will be described with reference to FIGS. 1 to 4.

As illustrated in FIG. 1, an induction motor 10 includes a stator 20, a rotor 30, a case 50, and a rotary shaft 60. The stator 20 and the rotor 30 are housed in the case 50. The stator 20 is fixed to the case 50. The induction motor 10 is of an inner rotor type in which the rotor 30 is disposed in the stator 20.

In the illustrated example, the induction motor 10 is a three-phase AC motor having 8 poles and 24 slots. However, for example, the number of poles, the number of slots, and the number of phases can be appropriately changed.

In the induction motor 10, the axes of the stator 20 and the rotor 30 are on a common axis. Hereinafter, this common axis is referred to as a central axis O (center axis of the rotor 30). A direction of the central axis O (an axial direction of a rotor core 31 described below) is referred to as an axial direction, a direction orthogonal to the central axis O (a radial direction of the rotor core 31 described below) is referred to as a radial direction, and a direction circling around the central axis O (a circumferential direction of the rotor core 31 described below) is referred to as a circumferential direction.

The stator 20 includes a stator core 21 and a winding (not illustrated).

The stator core 21 includes a core back 22 (yoke) having a cylindrical shape (cylinder shape) and a plurality of teeth 23.

The core back 22 is formed in a circular shape in a plane view in which the induction motor 10 is viewed from the axial direction.

The plurality of teeth 23 protrude inward in the radial direction from the core back 22 (toward the central axis O of the core back 22 along the radial direction). The plurality of teeth 23 are disposed at equal intervals in the circumferential direction. In the illustrated example, 24 teeth 23 are provided at intervals of a central angle of 15 degrees with a center on the central axis O. The plurality of teeth 23 are formed in an equal shape and an equal size. A stator slot 24 is formed between the teeth 23 adjacent in the circumferential direction.

The winding is wound around the teeth 23. The winding may be concentratedly wound or may be distributedly wound.

The rotor 30 is disposed inside the stator 20 (stator core 21) in the radial direction. The rotor 30 includes the rotor core 31 and a plurality of secondary conductors 32.

The rotor core 31 is formed in a cylindrical shape (cylinder shape) disposed coaxially with the stator 20. The rotary shaft 60 is disposed in the rotor core 31. The rotary shaft 60 is fixed to the rotor core 31 so as to rotate together with the rotor core 31.

The plurality of secondary conductors 32 are fixed to the rotor core 31. The plurality of secondary conductors 32 are disposed at equal intervals in the circumferential direction. In the illustrated example, 19 of the plurality of secondary conductors 32 are provided.

A plurality of insertion holes 34 penetrating the rotor core 31 in the axial direction are formed in the rotor core 31. The plurality of insertion holes 34 are provided corresponding to the plurality of secondary conductors 32. Each secondary conductor 32 is fixed to the rotor core 31 in a state of being disposed in the corresponding insertion hole 34. Each secondary conductor 32 can be fixed to the rotor core 31, for example, by bonding an outer surface of the secondary conductor 32 to an inner surface of the insertion hole 34 with an adhesive.

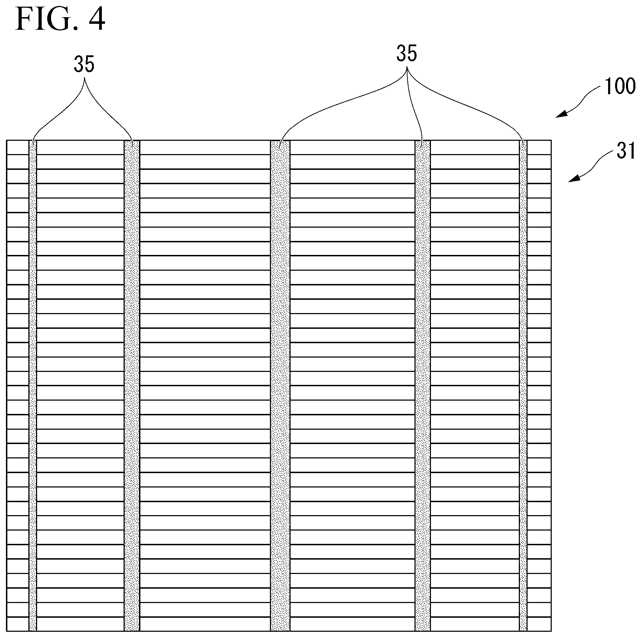

Note that a laminated core can be used as the stator core 21 and the rotor core 31. FIG. 4 is a view from the side in a case where the rotor core 31 is a laminated core 100. FIG. 4 is a schematic view, and dimensions of the laminated core 100, the number of slots 35 described below, and the like are different from those in the actual rotor core 31. A plurality of electrical steel sheets are stacked to form the laminated core 100. The stacked electrical steel sheets are fixed to each other by, for example, caulking, adhesion, or welding. In a case where the laminated core 100 is used as the stator core 21 and the rotor core 31, all of the electrical steel sheets constituting the laminated core 100 have the same shape in plane view.

Each electrical steel sheet forming the stator core 21 and the rotor core 31 is formed, for example, by punching an electrical steel sheet serving as a base metal. As the electrical steel sheet, an electrical steel sheet formed using a known ordinary material can be used. The chemical composition of the electrical steel sheet is not particularly limited. In the illustrated example, a non-oriented electrical steel sheet is used as the electrical steel sheet. As the non-oriented electrical steel sheet, for example, a non-oriented electrical steel strip of JIS C 2552: 2014 can be used. However, as the electrical steel sheet, a grain-oriented electrical steel sheet can be used instead of the non-oriented electrical steel sheet. As the grain-oriented electrical steel sheet, for example, a grain-oriented electrical steel strip of JIS C 2553: 2012 can be used.

An insulating coating is provided on both surfaces of the electrical steel sheet in order to improve the workability of the electrical steel sheet and the iron loss of the laminated core 100. As a substance constituting the insulating coating, for example, (1) an inorganic compound, (2) an organic resin, and (3) a mixture of an inorganic compound and an organic resin can be applied. Examples of the inorganic compound include (1) complexes of a dichromate and boric acid, and (2) complexes of a phosphate and silica. Examples of the organic resin include epoxy-based resins, acrylic resins, acrylic styrene-based resins, polyester-based resins, silicon-based resins, and fluorine-based resins.

In the illustrated example, each of the stator core 21 and the rotor core 31 is the laminated core 100. In the stator core 21 and the rotor core 31, the above-described ordinary material is used as the electrical steel sheet.

Hereinafter, details of the rotor 30 will be described.

The plurality of secondary conductors 32 are embedded in the rotor core 31 as described above. The plurality of secondary conductors 32 are connected to each other at one end portion in the axial direction outside the rotor core 31 in the axial direction (in the outside of the rotor core 31), and also connected to each other at another end portion outside the rotor core 31 in the axial direction (in the outside of the rotor core 31). In the illustrated example, the secondary conductor 32 has a rectangular parallelepiped shape. The secondary conductor 32 has a rectangular shape in plane view.

Here, in the induction motor 10, a gap (opening part) called an open slot 35 is provided on an outer circumferential portion (outer peripheral side) of each of the plurality of secondary conductors 32 in order to transmit the rotor magnetic flux to the stator 20 efficiently. Hereinafter, the open slot 35 is simply referred to as a slot 35. A plurality of slots 35 are disposed outside the plurality of secondary conductors 32 of the rotor core 31 in the radial direction of the rotor core 31. The plurality of slots 35 are open on the outer circumference of the rotor core 31 outside the plurality of secondary conductors 32 in the radial direction. The plurality of slots 35 are gap portions penetrating the rotor core 31 in the axial direction. The plurality of slots 35 are continuous over the total length of the rotor core 31 in the axial direction. The plurality of secondary conductors 32 are exposed to the outside in the radial direction through the plurality of slots 35. Each slot 35 functions as, for example, a flux barrier provided for appropriate distribution of an inflow path of a magnetic flux (magnetic flux path) from the rotor core 31 toward the stator 20 (the plurality of teeth 23). Thus, the magnetic flux is effectively transmitted from the rotor core 31 to the stator 20, and effects such as an increase in torque and a reduction in stress can be obtained. The width of the slot 35 in the circumferential direction is preferably larger than the width of the insertion hole 34 in the circumferential direction.

In a case where the laminated core 100 is used as the rotor core 31, all of the electrical steel sheets constituting the rotor core 31 preferably have the same shape including the slot 35 and the insertion hole 34 in plane view. In all of the electrical steel sheets constituting the rotor core 31, the shapes and the arrangements of the slots 35 and the insertion holes 34 preferably coincide with each other. The opening part of the slot 35 is preferably formed to be continuous in parallel with the axial direction (the stacking direction of the laminated core 100 in a case where the rotor core 31 is the laminated core 100) or perpendicularly to the planar direction of the electrical steel sheet in viewing the rotor core 31 from the side. In all of the electrical steel sheets constituting the rotor core 31, the arrangements and the shapes of the slots 35 preferably coincide with each other in the axial direction. That is, in viewing the rotor core 31 from the side, the slots 35 preferably link with each other over the total length in the axial direction, and are preferably not disconnected even in a part. The slots 35 preferably have the same shape.

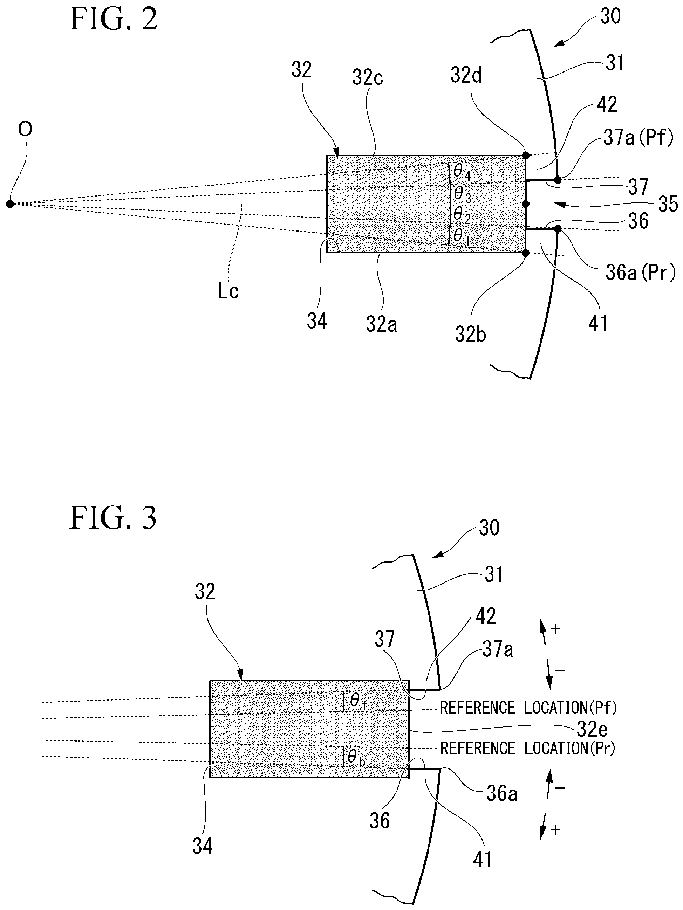

As illustrated in FIG. 2, the rotor core 31 is provided with a slot rear end surface 36 and a slot front end surface 37. The slot rear end surface 36 and the slot front end surface 37 form a pair of end surfaces of the slot 35. The slot rear end surface 36 and the slot front end surface 37 are provided so as to face each other with the slot 35 interposed therebetween in the circumferential direction (rotation direction). The slot rear end surface 36 is positioned in the rear with respect to a reference line Lc in the rotation direction (circumferential direction) of the induction motor 10. The slot rear end surface 36 is an end surface of the slot 35 on the rotation rear side. The slot front end surface 37 is positioned in the front with respect to the reference line Lc in the rotation direction of the induction motor 10. The slot front end surface 37 is an end surface of the slot 35 on the rotation front side. In the illustrated example, the slot rear end surface 36 and the slot front end surface 37 are parallel to each other.

The reference line Lc is a line defined so as to intersect the central axis O of the rotor core 31 and pass through the center of the secondary conductor 32 in the circumferential direction. The shapes of the secondary conductor 32 and the insertion hole 34 are symmetrical in the circumferential direction with respect to the reference line Lc. In the present embodiment, the secondary conductor 32 and the insertion hole 34 have an equal shape and an equal size in plane view. The secondary conductor 32 and the insertion hole 34 have a rectangular shape having a pair of sides extending along the radial direction (in parallel with the radial direction) and longer in the radial direction in plane view. In the present embodiment, the shapes of both the secondary conductor 32 and the insertion hole 34 are symmetrical in the circumferential direction with respect to the reference line Lc, but only one of the shapes of the secondary conductor 32 and the insertion hole 34 may be symmetrical in the circumferential direction with respect to the reference line Lc. In the rotor 30, at least one of the shapes of the secondary conductor 32 and the insertion hole 34 is symmetrical in the circumferential direction with respect to the reference line Lc.

Hereinafter, the front of the induction motor 10 in the rotation direction (circumferential direction) is simply referred to as front F, and the rear in the rotation direction is simply referred to as rear R. Note that in the case of the induction motor 10 rotatable in both directions around the central axis O, the rotation direction means a rotation direction in which the induction motor 10 mainly rotates. In the illustrated example, the counterclockwise direction in viewing the paper surface is referred to as the front F, and the clockwise direction is referred to as the rear R.

Here, a rear reference location (rotation rear reference location) Pr and a front reference location (rotation front reference location) Pf will be described as reference locations necessary for determining the shape of the slot 35.

In the secondary conductor 32, an end portion of a first side surface 32a on the rear R side on the outside in the radial direction (the outer peripheral side of the rotor core 31 along the radial direction) is referred to as a first outside end portion 32b. In the secondary conductor 32, an end portion of a second side surface 32c on the front F side on the outside in the radial direction is referred to as a second outside end portion 32d. An end portion of the slot rear end surface 36 on the outside in the radial direction is referred to as a rotation rear end portion 36a. An end portion of the slot front end surface 37 on the outside in the radial direction is referred to as a rotation front end portion 37a.

A separation angle in the circumferential direction around the central axis O of the rotor core 31 between the first outside end portion 32b and the rotation rear end portion 36a is represented by θ1. A separation angle in the circumferential direction around the central axis O of the rotor core 31 between the second outside end portion 32d and the rotation front end portion 37a is represented by θ4. A separation angle in the circumferential direction around the central axis O of the rotor core 31 between the reference line Lc and the rotation rear end portion 36a is represented by θ2. A separation angle in the circumferential direction around the central axis O of the rotor core 31 between the reference line Lc and the rotation front end portion 37a is represented by θ3.

Under this condition, an end portion of the slot rear end surface 36 on the outside in the radial direction (rotation rear end portion 36a) at separation angles satisfying θ1 = θ2 = θ3 = θ4 is determined as the rear reference location Pr, and an end portion of the slot front end surface 37 on the outside in the radial direction (rotation front end portion 37a) is determined as the front reference location Pf.

In other words, the rear reference location Pr is set to a point where a straight line intersects the outer circumference circle of the rotor core 31, and the straight line bisects the central angle formed by the reference line Lc with a straight line intersecting the central axis O and passing through the first outside end portion 32b of the secondary conductor 32 to satisfy θ1 = θ2. The front reference location Pf is set to a point where a straight line intersects the outer circumference circle of the rotor core 31, and the straight line bisects the central angle formed by the reference line Lc with a straight line intersecting the central axis O and passing through the second outside end portion 32d of the secondary conductor 32 to satisfy θ3 = θ4. In other words, the rear reference location Pr is the position of the rotation rear end portion 36a in the circumferential direction (a straight line passing through the central axis O of the rotor core 31 and the rotation rear end portion 36a) at separation angles satisfying θ1 = θ2 = θ3 = θ4. The front reference location Pf is the position of the rotation front end portion 37a in the circumferential direction (a straight line passing through the central axis O of the rotor core 31 and the rotation front end portion 37a) at separation angles satisfying θ1 = θ2 = θ3 = θ4.

In the induction motor 10 according to Reference Example, the separation angles satisfy θ1 = θ2 = θ3 = θ4. In this case, the rotor core 31 is provided with a first support portion 41 and a second support portion 42. The first support portion 41 is a portion, in the rotor core 31, positioned on the outside of the secondary conductor 32 in the radial direction in the rear of the slot rear end surface 36. The second support portion 42 is a portion, in the rotor core 31, positioned on the outside of the secondary conductor 32 in the radial direction in the front of the slot front end surface 37. The first support portion 41 and the second support portion 42 receive a centrifugal force acting on the secondary conductor 32, and regulate, for example, bulging of the secondary conductor 32 to the outside in the radial direction.

Here, if the separation angle θ1 is too small, the slot rear end surface 36 is too close to the first outside end portion 32b in the circumferential direction. Therefore, the first support portion 41 is too small. If the separation angle θ4 is too small, the slot front end surface 37 is too close to the second outside end portion 32d in the circumferential direction. Therefore, the second support portion 42 is too small. As a result, the centrifugal force acting on the secondary conductor 32 is difficult to bear by the first support portion 41 and the second support portion 42. Therefore, a configuration is preferable in which the separation angles θ1 and θ4 are set to be equal to or larger than the separation angle θ1 and the separation angle θ4 satisfying θ1 = θ2 = θ3 = θ4 as illustrated in FIG. 2 and the centrifugal force acting on the secondary conductor 32 is bore by the first support portion 41 and the second support portion 42.

Meanwhile, a configuration is not preferable in which the separation angles θ1 and θ4 are smaller than the separation angles θ1 and θ4 illustrated in FIG. 2, from the viewpoint of bearing the centrifugal force acting on the secondary conductor 32.

Next, the separation angle θb and the separation angle θf of the slot 35, which are necessary for determining the shape of the slot 35, will be described with reference to FIG. 3.

As illustrated in FIG. 3, θb represents the separation angle of the rotation rear end portion 36a with respect to the rear reference location Pr toward the rotation rear. A separation angle θb toward the rear R is positive (+) and a separation angle θb toward the front F is negative (-) with respect to the rear reference location Pr. θf represents the separation angle of the rotation front end portion 37a with respect to the front reference location Pf toward the rotation front. A separation angle θf toward the front F is positive (+) and a separation angle θf toward the rear R is negative (-) with respect to the front reference location Pf.

Therefore, in the configuration in which the separation angle θb and the separation angle θf are in the positive ranges, the first support portion 41 and the second support portion 42 are disposed at positions receding in the circumferential direction from an outer end portion 32e of the secondary conductor 32 on the outside in the radial direction. That is, the regions corresponding to the first support portion 41 and the second support portion 42 become small. Therefore, the configuration in which the separation angle θb and the separation angle θf are in the positive ranges is not preferable from the viewpoint of bearing the centrifugal force acting on the secondary conductor 32 by the first support portion 41 and the second support portion 42.

### [First Embodiment]

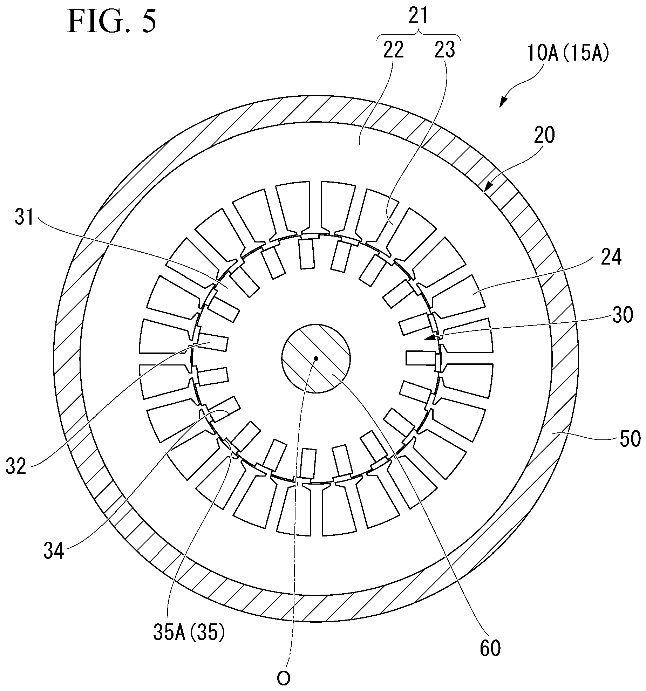

Here, in induction motors 10A and 10B according to the present embodiment illustrated in FIGS. 5 to 9, a slot rear end surface 36 and a slot front end surface 37 are intentionally asymmetrical in the circumferential direction with reference to a reference line Lc from the viewpoint of improving torque. In the case of using the laminated core 100 as a rotor core 31, slots 35A and 35B of all of the electrical steel sheets constituting the rotor core 31 are asymmetrical in the circumferential direction with reference to the reference line Lc. Others are the same as those of the induction motor 10 according to Reference Example.

### (First Example)

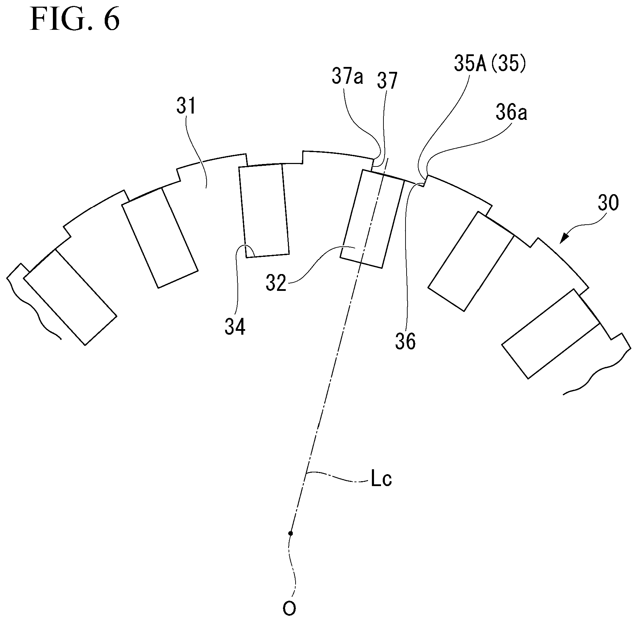

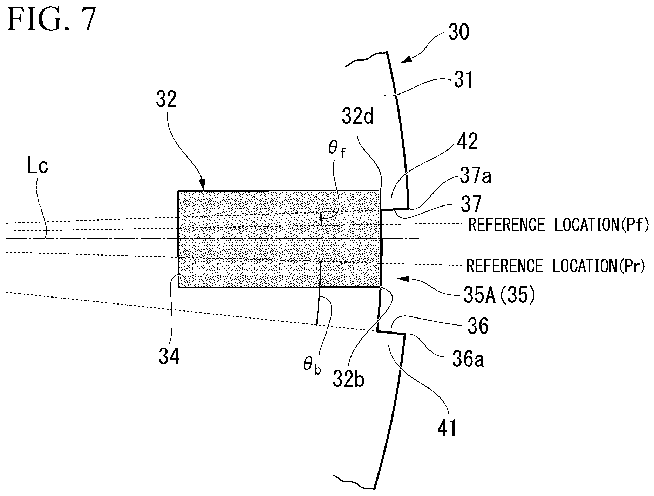

First, in the induction motor 10A of First Example illustrated in FIGS. 5 to 7, the slot rear end surface 36 is displaced to the rear R side, and thus the slot 35A is asymmetrical with respect to the reference line Lc. FIG. 7 is a schematic view illustrating the separation angle illustrated in FIG. 6.

As illustrated in FIGS. 5 to 7, the shape of the opening part of the slot 35A is determined as follows.

That is, when a rear reference location Pr is set to 0, the separation angle θb of a rotation rear end portion 36a in the circumferential direction with respect to the rear reference location Pr satisfies 0 ≤ θb ≤ 0.5θs.

Here, θs satisfies θs = 360 [deg]/Nslot, and Nslot means the number of stator slots 24 (in the illustrated example, 24).

In the range of 0 ≤ θb ≤ 0.5θs, the separation angle θf of a rotation front end portion 37a in the circumferential direction with respect to a front reference location Pf is determined as follows.

That is, when the front reference location Pf is set to 0, the separation angle θf satisfies -0.45θb ≤ θf ≤ 0 when θb satisfies 0 ≤ θb < 0.45θs. Furthermore, the separation angle θf satisfies 40b - 2θs ≤ θf ≤ 0 when θb satisfies 0.45θs ≤ θb ≤ 0.5θs.

In the illustrated example, θf = 0 and θb = 0.45θs.

The separation angle θf is measured, for example, as follows. One electrical steel sheet is extracted from the laminated core 100, the shape of the slot 35A is scanned to obtain image data, and the image data are measured by CAD.

Thus, if the relationship between the separation angle θb and the separation angle θf is satisfied, the torque of the induction motor 10A can be improved (increased) by the shape change of the slot 35A as described below.

### (Second Example)

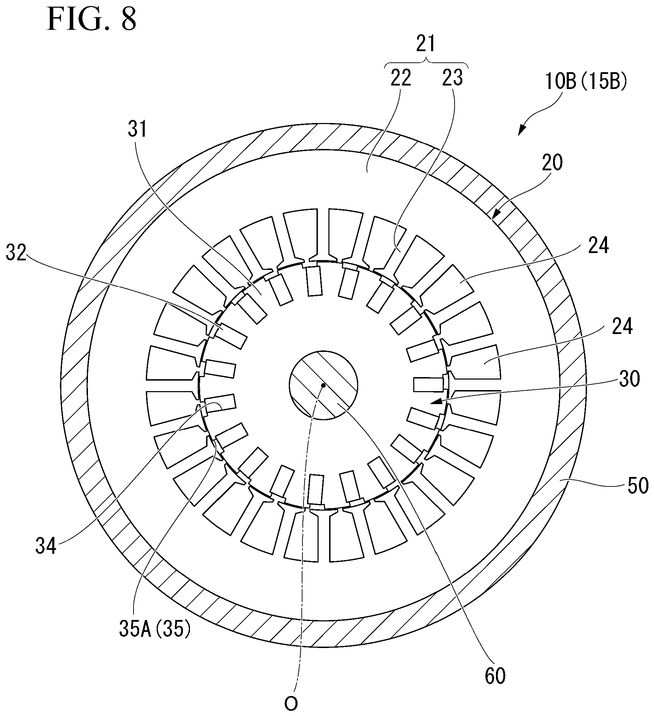

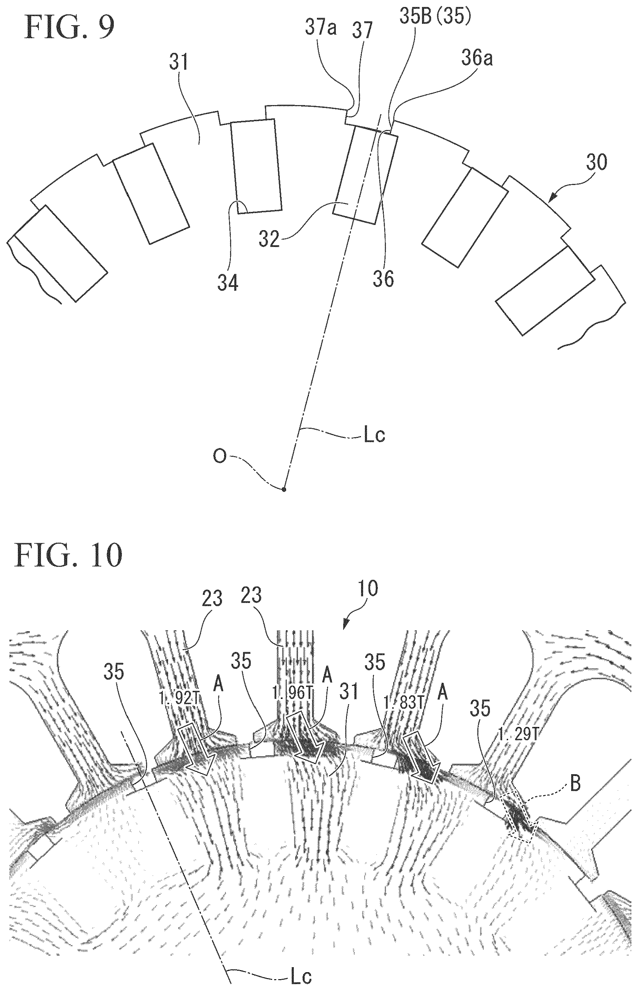

Next, in the induction motor 10B of Second Example illustrated in FIGS. 8 and 9, the slot front end surface 37 is displaced to the front F side, and thus the slot 35B is asymmetrical with respect to the reference line Lc.

As illustrated in FIGS. 8 and 9, the shape of the opening part of the slot 35B is determined as follows.

That is, when a front reference location Pf is set to 0, the separation angle θf of a rotation front end portion 37a in the circumferential direction with respect to the front reference location Pf satisfies 0 ≤ θf ≤ 0.45θs.

In the range of 0 ≤ θf ≤ 0.45θs, the separation angle θb of a rotation rear end portion 36a in the circumferential direction with respect to a rear reference location Pr is determined as follows.

That is, when the rear reference location Pr is set to 0, the separation angle θb satisfies -0.8θf ≤ θb < 0 when θf satisfies 0 ≤ θf ≤ 0.25θs. Furthermore, the separation angle θb satisfies θf - 0.45θs ≤ θb < 0 when θf satisfies 0.25θs < θf ≤ 0.45θs.

In the illustrated example, θb = 0 and θf = 0.25θs.

Thus, if the relationship between the separation angle θb and the separation angle θf is satisfied, the torque of the induction motor 10B can be improved (increased) by the shape change of the slot 35B as described below.

### (Comparison of Magnetic Flux between Reference Example and First Example)

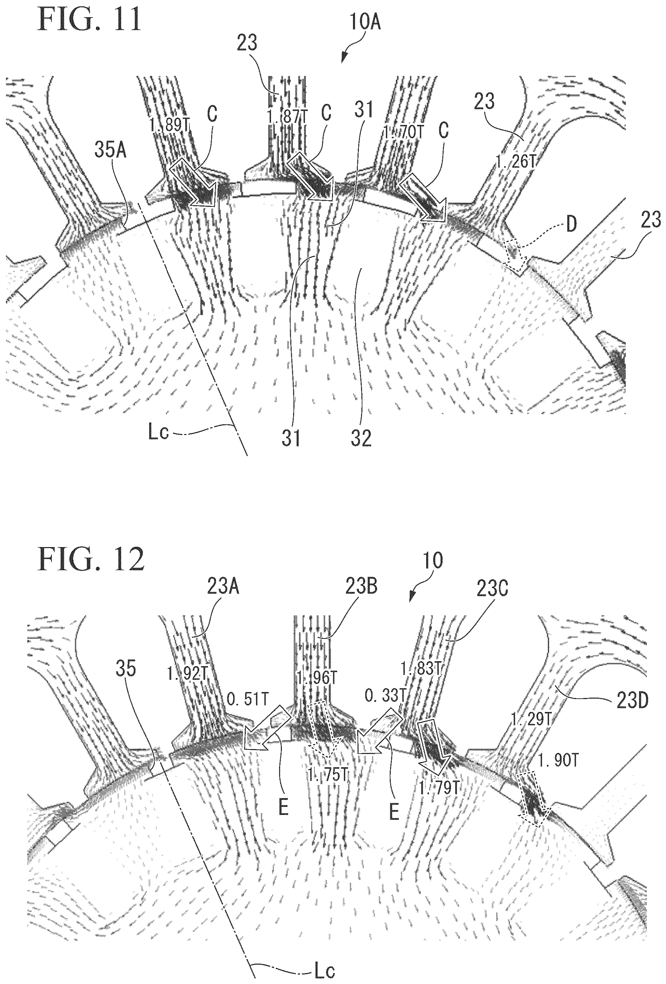

Next, with reference to FIGS. 10 and 11, study was performed on the torque of the induction motor 10 of Reference Example and the induction motor 10A of First Example of the embodiment in which the slot 35A was formed. FIG. 10 illustrates a flow of a magnetic flux in the induction motor 10 of Reference Example, and FIG. 11 illustrates a flow of a magnetic flux in the induction motor 10A of First Example of the embodiment. The magnetic fluxes (arrows) illustrated in FIGS. 10 and 11 are based on results of simulation by software.

FIGS. 10 and 11 illustrate the magnetic flux density in each of four teeth 23 and the flow of the magnetic flux from each of the teeth 23 to the rotor core 31 in the induction motors 10 and 10A, respectively.

As illustrated in FIG. 10, in the induction motor 10 of Reference Example, the incident angle of the magnetic flux density vector indicated by a solid arrow A on the rotor core 31 is kept to be small in the three front teeth 23 having magnetic flux densities of 1.92 T, 1.96 T, and 1.83 T, respectively. In the tooth 23 following these three teeth from the rear and having a magnetic flux density of 1.92 T, the incident angle of the magnetic flux density vector indicated by the broken-line arrow B on the rotor core 31 is also kept relatively small.

As illustrated in FIG. 11, in the induction motor 10A of the embodiment, the magnetic flux density of the tooth 23 in the frontmost position is 1.89 T and thus lower than that in the induction motor 10 of Reference Example, 1.92 T. The magnetic flux densities of other teeth 23 in the induction motor 10A are 1.87 T, 1.70 T, and 1.26 T in order from the front to the rear, and lower than those in the induction motor 10, 1.96 T, 1.83 T, and 1.29 T, respectively. That is, in the induction motor 10A of the embodiment, the magnetic flux density is lower as a whole than in the induction motor 10 of Reference Example.

Meanwhile, in the induction motor 10A of the embodiment, the incident angle of the magnetic flux density vector indicated by a solid arrow C on the rotor core 31 is large in the two front teeth 23. As a result, it is considered that the Maxwell stress is increased to achieve improvement in torque in the induction motor 10A of the embodiment in which the slot 35A is formed.

Here, the magnetic flux path is blocked in the portion of the magnetic flux density vector indicated by the broken-line arrow D. The blocking of the magnetic flux path leads to a decrease in torque, but the magnetic flux density of the tooth 23 is low in this portion, and therefore it is considered that the influence on a decrease in torque is small.

### (Comparison of Magnetic Flux between Reference Example and Second Example)

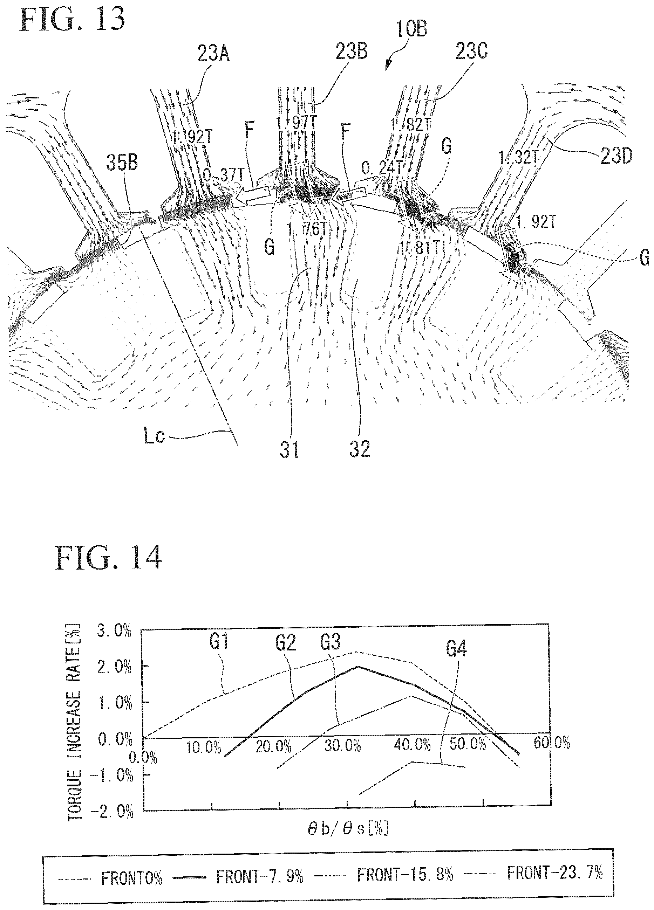

Next, with reference to FIGS. 12 and 13, study was performed on the torque of the induction motor 10 of Reference Example and the induction motor 10B of Second Example of the embodiment in which the slot 35B was formed. FIG. 12 illustrates a flow of a magnetic flux in the induction motor 10 of Reference Example, and FIG. 13 illustrates a flow of a magnetic flux in the induction motor 10B of Second Example of the embodiment. The magnetic fluxes (arrows) illustrated in FIGS. 12 and 13 are based on results of simulation by software.

FIGS. 12 and 13 illustrate the magnetic flux density in each of four teeth 23 and the flow of the magnetic flux from each of the teeth 23 to the rotor core 31 in the induction motors 10 and 10B, respectively. Hereinafter, these four teeth 23 are referred to as the teeth 23A, 23B, 23C, and 23D in order from the front for explanation.

As illustrated in FIG. 12, in the induction motor 10 of Reference Example, a magnetic flux having a magnetic flux density of 0.51 T flows from the tooth 23B to a portion positioned in the front of the tooth 23B (across the slot 35) in the rotor core 31. Furthermore, a magnetic flux having a magnetic flux density of 0.33 T flows from the tooth 23C to a portion positioned in the front of the tooth 23C (across the slot 35) in the rotor core 31. This magnetic flux generates a large negative torque indicated by the solid arrow E.

As illustrated in FIG. 13, in the induction motor 10B of the embodiment, the magnetic flux path flowing from the tooth 23B to the rotor core 31 is obstructed by the slot 35B, and a magnetic flux flows from each tooth 23 to a tooth 23 positioned in the front of each tooth 23A. Specifically, a magnetic flux having a magnetic flux density of 0.37 T flows from the tooth 23B to the tooth 23A, and a magnetic flux having a magnetic flux density of 0.24 T flows from the tooth 23C to the tooth 23B. Therefore, the magnetic flux path flowing from the teeth 23 to the rotor core 31 can be obstructed.

Here, a magnetic flux flowing from a tooth 23 to an adjacent tooth 23 (front tooth 23) does not generate a negative torque. Meanwhile, a magnetic flux flowing from a tooth 23 to a portion positioned in the front of the tooth 23 (across the slot 35) in the rotor core 31 contributes to a negative torque. Therefore, if a magnetic flux flows from a tooth 23 to an adjacent tooth 23 to obstruct the magnetic flux path flowing from the tooth 23 to the rotor core 31, the negative torque in the front F indicated by a solid arrow can be kept to be small.

In the induction motor 10B of the embodiment, as indicated by a broken-line arrow G, the magnetic flux density contributing to the positive torque is also slightly larger than that in the induction motor 10 of Reference Example. Specifically, the magnetic flux densities contributing to the positive torque indicated by a broken-line arrow G from the teeth 23B, 23C, and 23D are 1.76 T, 1.81 T, and 1.92 T, respectively. Meanwhile, the magnetic flux densities from the teeth 23B, 23C, and 23D of the induction motor 10 of Reference Example illustrated in FIG. 12 are 1.75 T, 1.79 T, and 1.90 T, respectively. A reason why the magnetic flux density contributing to the positive torque is slightly increased is considered to be because the magnetic flux path contributing to the negative torque is obstructed and thus the obstructed magnetic flux flows into the path contributing to the positive torque. As a result, it is considered that improvement in torque was achieved in the induction motor 10B of the embodiment in which the slot 35B is formed.

### (Consideration of Suitable Positions of Slot Rear End Surface 36 and Slot Front End Surface 37)

Next, results of analyzing the relationship between the position change of the rotation rear end portion 36a of the slot rear end surface 36 and the torque increase rate in the induction motor 10A in which the slot 35A is formed will be described with reference to the graph of FIG. 14. FIG. 14 is a graph illustrating increase rates of torque with respect to a position change of the rotation rear end portion 36a in the slot 35A. In FIG. 14, the vertical axis represents the torque increase rate (%), and the horizontal axis represents the position of the rotation rear end portion 36a by θb/θs (%). The analysis conditions are based on Table 1.

**[Table 1]**

| | |
|---|---|
| Current | 5.0 Arms |
| Slip | 10% |
| Frequency | 50 Hz |
| Rotor diameter | 27 mm |
| Number of stator slots | 24 |
| Number of secondary conductors | 19 |

In FIG. 14, a graph G1 shows the result of analyzing the increase rate of torque by moving the position of the rotation rear end portion 36a within a range of θb/θs of 0 to 60% in a state where the rotation front end portion 37a of the slot front end surface 37 is fixed at a position of θf/θs = 0 %.

A graph G2 shows the result of analyzing the increase rate of torque by moving the position of the rotation rear end portion 36a within a range of θb/θs of 0 to 60% in a state where the rotation front end portion 37a is fixed at a position of θf/θs = -7.9 %.

A graph G3 shows the result of analyzing the increase rate of torque by moving the position of the rotation rear end portion 36a within a range of θb/θs of 0 to 60% in a state where the rotation front end portion 37a is fixed at a position of θf/θs = -15.8 %.

A graph G4 shows the result of analyzing the increase rate of torque by moving the position of the rotation rear end portion 36a within a range of θb/θs of 0 to 60% in a state where the rotation front end portion 37a is fixed at a position of θf/θs = -23.7 %.

From the analysis results of the graphs G1 to G4, it is recognized that the torque is increased in at least a part of the range of the position of the rotation front end portion 37a in a range of θf/θs = 0 to -15.8%. That is, it can be seen that in a case where the slot 35 is formed in an opening shape asymmetrical with respect to the reference line Lc so that the slot rear end surface 36 is positioned in the rear R side with respect to the reference location as in the slot 35A illustrated in FIG. 6, the torque is improved (increased) in at least a part of the range within a range of θf/θs = 0 to -15.8% and θb/θs = 0 to 60%.

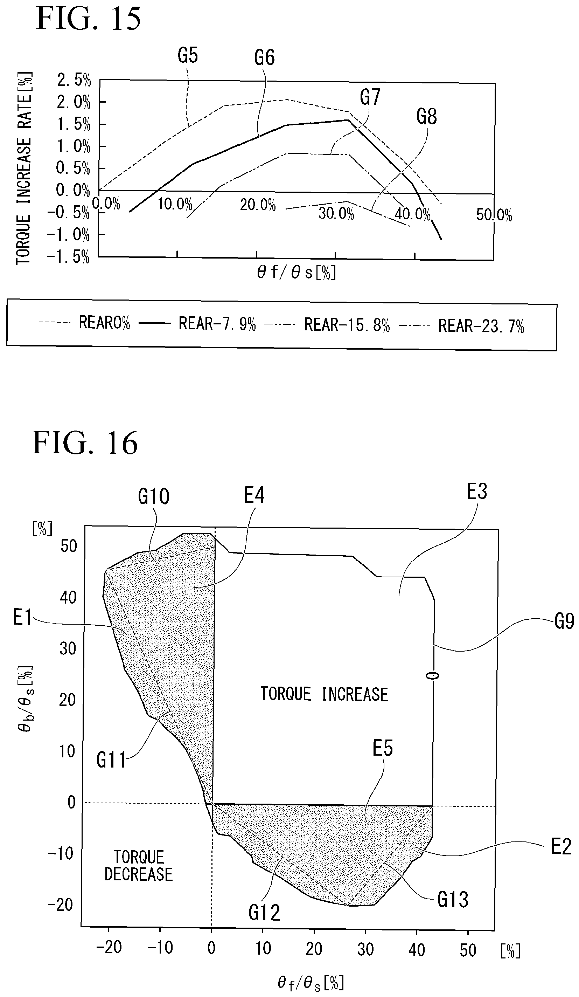

Next, results of analyzing the relationship between the position change of the rotation front end portion 37a of the slot front end surface 37 and the torque increase rate in the induction motor 10B in which the slot 35B is formed will be described with reference to the graph of FIG. 15. FIG. 15 is a graph illustrating increase rates of torque with respect to a position change of the rotation front end portion 37a in the slot 35B. In FIG. 15, the vertical axis represents the torque increase rate (%), and the horizontal axis represents the position of the rotation front end portion 37a by θf/θs (%). The analysis conditions are based on Table 1.

In FIG. 15, a graph G5 shows the result of analyzing the increase rate of torque by moving the position of the rotation front end portion 37a within a range of θf/θs of 0 to 60% in a state where the rotation rear end portion 36a of the slot rear end surface 36 is fixed at a position of θb/θs = 0 %.

A graph G6 shows the result of analyzing the increase rate of torque by moving the position of the rotation front end portion 37a within a range of θf/θs of 0 to 60% in a state where the rotation rear end portion 36a is fixed at a position of θb/θs = -7.9 %.

A graph G7 shows the result of analyzing the increase rate of torque by moving the position of the rotation front end portion 37a within a range of θf/θs of 0 to 60% in a state where the rotation rear end portion 36a is fixed at a position of θb/θs = -15.8 %.

A graph G8 shows the result of analyzing the increase rate of torque by moving the position of the rotation front end portion 37a within a range of θf/θs of 0 to 60% in a state where the rotation rear end portion 36a is fixed at a position of θb/θs = -23.7 %.

From the analysis results of the graphs G5 to G8, it is recognized that the torque is increased in at least a part of the range of the position of the rotation rear end portion 36a in a range of θb/θs = 0 to -15.8%. That is, it can be seen that in a case where the slot 35 is formed in an opening shape asymmetrical with respect to the reference line Lc so that the slot front end surface 37 is positioned in the front F side with respect to the reference location as in the slot 35B illustrated in FIG. 9, the torque is improved (increased) in at least a part of the range within a range of θb/θs = 0 to -15.8% and θf/θs = 0 to 60%.

Next, the torque increase range by the slot 35A and the slot 35B will be described with reference to the graph of FIG. 16. FIG. 16 is a graph produced on the basis of the analysis results of FIG. 14 and the analysis results of FIG. 15. FIG. 16 is a graph illustrating an increase range of torque with respect to a position change by the rotation rear end portion 36a of the slot 35A and the rotation front end portion 37a of the slot 35B. In FIG. 16, the vertical axis represents the position of the rotation rear end portion 36a by θb/θs (%), and the horizontal axis represents the position of the rotation front end portion 37a by θf/θs (%).

In FIG. 16, a graph G9 indicates a contour line at which the torque is not increased (the torque increase amount becomes 0) from that in the induction motor 10 of Reference Example. The inside of the line of the graph G9 indicates the range in which the torque is increased.

Here, if the separation angle θ1 and the separation angle θ4 illustrated in FIG. 2 are too small, the centrifugal force acting on the secondary conductor 32 is difficult to bear by the first support portion 41 and the second support portion 42. Therefore, in order to bear the centrifugal force acting on the secondary conductor 32 by the first support portion 41 and the second support portion 42, the separation angle θf is preferably in a range of 0 to a negative value, and the separation angle θb is preferably in a range of 0 to a negative value.

In the graph G9, a shaded portion E1 indicates a preferable allowable range for implementation in a case where, as in the slot 35A illustrated in FIG. 6, the slot rear end surface 36 is positioned in the rear R side with respect to the reference location and the slot is asymmetrical with respect to the reference line Lc. In the graph G9, a shaded portion E2 indicates a preferable allowable range for implementation in a case where, as in the slot 35B illustrated in FIG. 9, the slot front end surface 37 is positioned in the front F side with respect to the reference location and the slot is asymmetrical with respect to the reference line Lc. In the range surrounded by the line indicating θf/θs = 0, the line indicating θb/θs = 0, and the outer edge of a blank portion E3 described below, E2 represents a range in which θf/θs ≥ 0 and θb/θs ≤ 0 are satisfied, and E1 represents a range in which θf/θs ≤ 0 and θb/θs ≥ 0 are satisfied. The slot is asymmetrical with respect to the reference line Lc, and therefore E1 and E2 do not include a point at which θf/θs = θb/θs = 0 is satisfied.

In the graph G9, the range indicated by the blank portion E3 also indicates a torque increase. In the blank portion E3, the separation angle θf is in a positive range in the slot 35A illustrated in FIG. 6, and the separation angle θb is in a positive range in the slot 35B illustrated in FIG. 8 (positioned in a so-called first quadrant). Therefore, the centrifugal force acting on the secondary conductor 32 is difficult to bear by the first support portion 41 and the second support portion 42. Therefore, the blank portion E3 is removed from the range preferable for implementation of the slot 35A and the slot 35B. However, for example, the centrifugal force of the secondary conductor 32 may be enabled to be born with another method, and thus the slot 35A and the slot 35B may be implemented in the range of the blank portion E3.

Next, a range E4 surrounded by a straight line G10, a straight line G11, and the line indicating θf/θs = 0 in FIG. 16 will be described. The range E4 is positioned inside the shaded portion E1 and satisfies the following relationship described with reference to FIGS. 5 and 6.

That is, when the rear reference location Pr is set to 0, the separation angle θb of the rotation rear end portion 36a in the circumferential direction with respect to the rear reference location Pr satisfies 0 ≤ θb ≤ 0.5θs.

In the range of 0 ≤ θb ≤ 0.5θs, the separation angle θf of the rotation front end portion 37a in the circumferential direction with respect to the front reference location Pf is determined as follows.

That is, when the front reference location Pf is set to 0, the separation angle θf satisfies -0.45θb ≤ θf ≤ 0 when θb satisfies 0 ≤ θb < 0.45θs. Furthermore, the separation angle θf satisfies 40b - 20s ≤ θf ≤ 0 when θb satisfies 0.45θs ≤ θb ≤ 0.5θs.

If the above-described relationship between the separation angle θb and the separation angle θf is satisfied, that is, the condition of First Example of First Embodiment is satisfied, the torque of the induction motor 10A can be improved by the shape change of the slot 35A.

In FIG. 16, a range E5 surrounded by a straight line G12, a straight line G13, and the line indicating θb/θs = 0 will be described. The range E5 is positioned inside the shaded portion E2 and satisfies the following relationship described with reference to FIGS. 8 and 9.

That is, when the front reference location Pf is set to 0, the separation angle θf of the rotation front end portion 37a in the circumferential direction with respect to the front reference location Pf satisfies 0 ≤ θf ≤ 0.45θs.

In the range of 0 ≤ θf ≤ 0.45θs, the separation angle θb of the rotation rear end portion 36a in the circumferential direction with respect to the rear reference location Pr is determined as follows.

That is, when the rear reference location Pr is set to 0, the separation angle θb satisfies -0.8θf ≤ θb < 0 when θf satisfies 0 ≤ θf ≤ 0.25θs. Furthermore, the separation angle θb satisfies θf - 0.45θs ≤ θb < 0 when θf satisfies 0.25θs < θf ≤ 0.45θs.

If the above-described relationship between the separation angle θf and the separation angle θb is satisfied, that is, the condition of Second Example of First Embodiment is satisfied, the torque of the induction motor 10B can be improved by the shape change of the slot 35B.

As described above, the induction motors 10A and 10B having high torque can be designed by calculating the magnetic fluxes in the induction motors 10A and 10B according to the positions of the slot rear end surface 36 and the slot front end surface 37, the number of stator slots 24 formed in the stator 20, and the number of secondary conductors 32, and designing induction motors 10A and 10B based on the calculation results.

The background of such an idea conceived by the present inventors is as follows.

The induction motors 10A and 10B obtain a torque by a Lorentz force that is generated from a magnetic flux due to the stator 20 current, and from the secondary current generated in a secondary conductor of the rotor 30 due to a temporal change of the magnetic flux. The Maxwell stress between the rotor 30 and the stator 20 also contributes to the torque. The induction motors 10A and 10B need to generate an induction current in a secondary conductor, and therefore the frequency of the stator 20 current and the rotor 30 rotation frequency are different. That is, the relative positional relationship between the rotor 30 and the stator 20 magnetic field temporally changes. Therefore, in the related art, there is almost no example of improving characteristics by changing the shapes of the slots 35A and 35B. There is an example of partially changing the secondary conductor shape, but there is no example of improving characteristics by the slots 35A and 35B.

For the purpose of improving the torque in the induction motors 10A and 10B having this structure, the present inventors conducted analysis based on the contents described in Japanese Unexamined Patent Application, First Publication No. 2021-114099, and thus studied optimization of the rotor 30 shape. As a result, it has been suggested that the torque can be improved by adding, in addition to the slots 35A and 35B, new flux barriers on both sides of the secondary conductor. As a result of further studies, it has been confirmed that the torque is further improved by opening a new flux barrier on the outer circumference of the rotor 30 core. As a result, it has been suggested that improvement in torque can be achieved by simply changing the opening positions of the existing slots 35A and 35B rather than by adding a new flux barrier.

The torques of the induction motors 10A and 10B are constituted by the Lorentz force received by the current of the secondary conductor and the Maxwell stress due to the magnetic flux generated from the secondary current, and the ratio of the Maxwell stress is generally large. Therefore, it is considered that if the opening positions of the slots 35A and 35B are changed to change the conduction path between the secondary current magnetic flux and the stator 20 magnetic flux, the Maxwell stress is particularly increased to improve the torques of the induction motors 10A and 10B.

### [Second Embodiment]

Here, in First Embodiment, an example is described in which an ordinary material is used in the stator core 21 and the rotor core 31 in the induction motors 10A and 10B (an ordinary material is used in the electrical steel sheets of the laminated core), but the material of the stator core 21 and the rotor core 31 is not limited thereto. For example, a high Bs material (high saturation magnetic flux density material) may be used as the material of the stator core 21 and the rotor core 31 (electrical steel sheets of the laminated core).

Hereinafter, induction motors 15A and 15B using a high Bs material will be described as Second Embodiment.

In the following description, in Second Embodiment in which a high Bs material is used, the induction motor 15A has a configuration having a slot 35A shifted backward with respect to the slot 35 of the induction motor 10 of Reference Example, and the induction motor 15B has a configuration having a slot 35B shifted forward with respect to the slot 35 of the induction motor 10 of Reference Example.

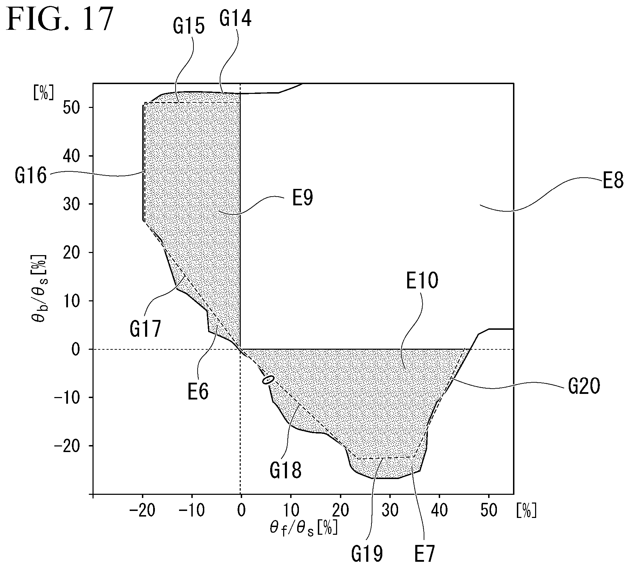

First, the torque increase range by the slots 35A and 35B of the induction motors 15A and 15B will be described with reference to the graph of FIG. 17. FIG. 17 is a graph illustrating an increase range of torque with respect to a position change by a rotation rear end portion 36a of the slot 35A and a rotation front end portion 37a of the slot 35B in the induction motors 15A and 15B. In FIG. 17, the vertical axis represents the position of the rotation rear end portion 36a by θb/θs (%), and the horizontal axis represents the position of the rotation front end portion 37a by θf/θs (%).

In FIG. 17, a graph G14 indicates a contour line at which the torque is not increased (the torque increase amount becomes 0) from that in the induction motor 10 of Reference Example. The inside of the line of the graph G14 indicates the range in which the torque is increased.

Here, if the separation angle θ1 and the separation angle θ4 illustrated in FIG. 2 are too small, the centrifugal force acting on the secondary conductor 32 is difficult to bear by the first support portion 41 and the second support portion 42. Therefore, as in First Embodiment, the separation angle θf is preferably in a range of 0 to a negative value, and the separation angle θb is preferably in a range of 0 to a negative value.

Therefore, in the graph G14, a shaded portion E6 indicates a preferable allowable range for implementation of the slot 35A illustrated in FIG. 6. In the graph G14, a shaded portion E7 indicates a preferable allowable range for implementation of the slot 35B illustrated in FIG. 9.

Here, with regard to a straight line G15, the range indicated by a blank portion E8 also indicates a torque increase. However, in the blank portion E8, the centrifugal force acting on the secondary conductor 32 is difficult to bear by the first support portion 41 and the second support portion 42, as in First Embodiment. Therefore, the blank portion E8 is removed from the range preferable for implementation of the slot 35A and the slot 35B. However, for example, the centrifugal force of the secondary conductor 32 may be enabled to be born with another method, and thus the slot 35A and the slot 35B may be implemented in the range of the blank portion E8.

Next, a range E9 surrounded by the straight line G15, a straight line G16, a straight line G17, and the line indicating θf/θs = 0 in FIG. 17 will be described. The range E9 indicates suitable positions of a slot rear end surface 36 and a slot front end surface 37 in the induction motor 15B. The range E9 is positioned inside the shaded portion E6 and satisfies the following relationship.

That is, when a rear reference location Pr is set to 0, the separation angle θb of the rotation rear end portion 36a in the circumferential direction with respect to the rear reference location Pr satisfies 0 ≤ θb ≤ 0.5θs.

In the range of 0 ≤ θb ≤ 0.5θs, the separation angle θf of the rotation front end portion 37a in the circumferential direction with respect to a front reference location Pf is determined as follows.

That is, when the front reference location Pf is set to 0, the separation angle θf satisfies -0.8θb ≤ θf when θb satisfies 0 ≤ θb < 0.25θs. Furthermore, the separation angle θf satisfies -2θs ≤ θf when θb satisfies 0.25θs < θb ≤ 0.5θs.

Thus, if the relationship between the separation angle θb and the separation angle θf is satisfied, the torque of the induction motor 15B can be improved (increased) by the shape change of the slot 35A.

In FIG. 17, a range E10 surrounded by a straight line G18, a straight line G19, a straight line G20, and the line indicating θb/θs = 0 will be described. The range E10 indicates suitable positions of a slot rear end surface 36 and a slot front end surface 37 in the induction motor 15A. The range E10 is positioned inside the shaded portion E7 and satisfies the following relationship.

That is, when a front reference location Pf is set to 0, the separation angle θf of the rotation front end portion 37a in the circumferential direction with respect to the front reference location Pf satisfies 0 ≤ θf ≤ 0.45θs.

In the range of 0 ≤ θf ≤ 0.45θs, the separation angle θb of the rotation rear end portion 36a in the circumferential direction with respect to a rear reference location Pr is determined as follows.

That is, when the rear reference location Pr is set to 0, the separation angle θb satisfies -0.8θf ≤ θb when θf satisfies 0 ≤ θf ≤ 0.25θs. Furthermore, the separation angle θb satisfies -0.25θs ≤ θb when θf satisfies 0.25θs < θf ≤ 0.35θs. In addition, the separation angle θb satisfies 2θf - 0.9θs ≤ θb when θf satisfies 0.35θs < θf ≤ 0.45θs.

Thus, if the relationship between the separation angle θb and the separation angle θf is satisfied, the torque of the induction motor 15A can be improved (increased) by the shape change of the slot 35B.

### [Comparison between First Embodiment and Second Embodiment]

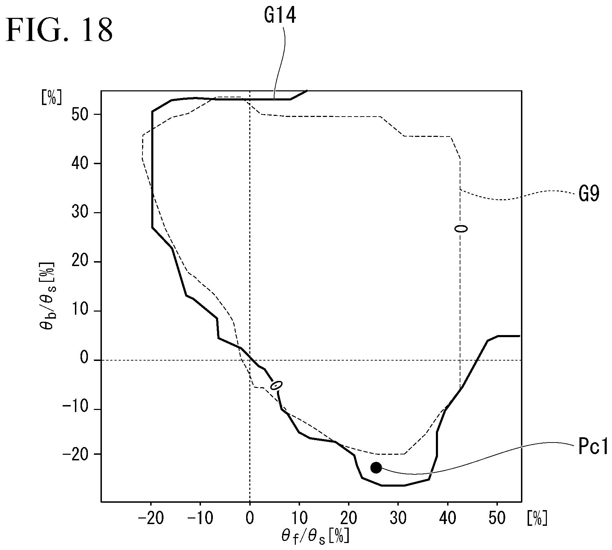

Next, the increase ranges of torque of the induction motors 10A and 10B of First Embodiment in which an ordinary material is used and the induction motors 15A and 15B of Second Embodiment in which a high Bs material is used will be described with reference to FIGS. 18 to 23.

First, the increase range of torque by the induction motor 10B and the induction motor 15B in which the slot 35B illustrated in FIG. 9 is used will be described with reference to FIGS. 18 to 20. FIG. 18 is a graph obtained by superimposing the graph of FIG. 16 and the graph of FIG. 17. FIG. 18 is a graph illustrating a difference in an increase range of torque by the slot 35B between the induction motors 10A and 10B and the induction motors 15A and 15B. In FIG. 18, the vertical axis represents the position of the rotation rear end portion 36a by θb/θs (%), and the horizontal axis represents the position of the rotation front end portion 37a by θf/θs (%).

As illustrated in FIG. 18, a first comparison point Pc1 is defined as a point at which the torque by the slot 35B is compared between the induction motor 10B and the induction motor 15B. The first comparison point Pc1 is included in the range preferable for implementation of the slot 35B illustrated in FIG. 9 in the graph G14 of the induction motor 15B. Meanwhile, the first comparison point Pc1 is out of the range preferable for implementation of the slot 35B in the graph G9 of the induction motor 10B.

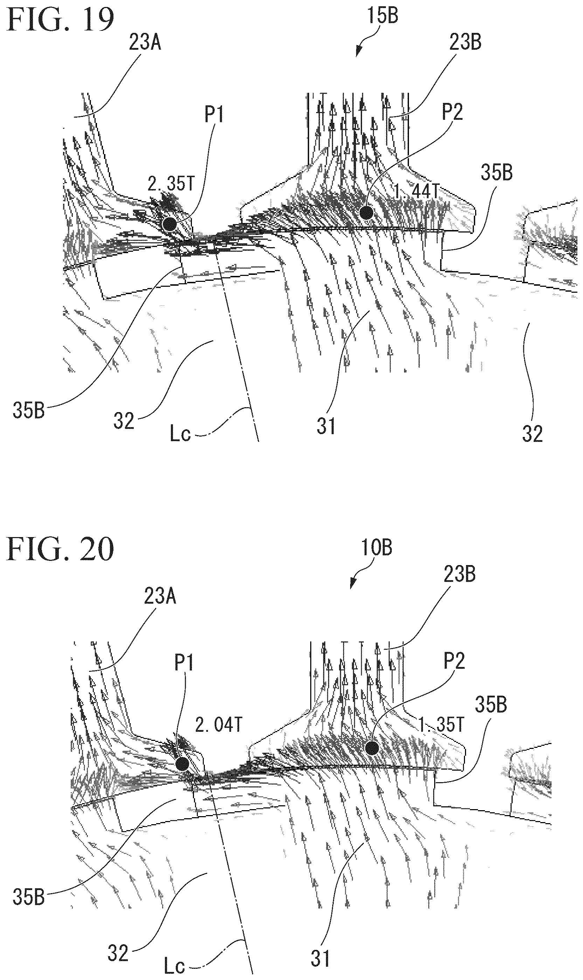

FIG. 19 illustrates an analysis result of the induction motor 15B (Second Embodiment) at the first comparison point Pc1, and FIG. 20 illustrates an analysis result of the induction motor 10B (First Embodiment) at the first comparison point Pc1. The magnetic fluxes (arrows) illustrated in FIGS. 19 and 20 are based on results of simulation by software.

FIGS. 19 and 20 illustrate the magnetic flux density in each of two teeth 23 and the flow of the magnetic flux from the rotor core 31 to each of the teeth 23 in the induction motors 15B and 10B, respectively. Hereinafter, these two teeth 23 are referred to as the teeth 23A and 23B in order from the front for explanation.

As illustrated in FIG. 19, in the induction motor 15B, the magnetic flux density of the magnetic flux from the rotor core 31 toward the front tooth 23A is 2.35 T at a portion P1 on the tooth 23A. The magnetic flux density of the magnetic flux from the rotor core 31 toward the rear tooth 23B is 1.44 T at a portion P2 on the tooth 23B. In the induction motor 15B, a high Bs material is used, and therefore the saturation magnetic flux density is high. Therefore, the magnetic flux density is increased at the portion P1, and the contribution of the magnetic flux density to the torque is increased. Thus, in the induction motor 15B, the first comparison point Pc1 illustrated in FIG. 18 is included in the range preferable for implementation of the slot 35B.

As illustrated in FIG. 20, in the induction motor 10B, the magnetic flux density of the magnetic flux from the rotor core 31 toward the front tooth 23A is 2.04 T at a portion P1 on the tooth 23A. The magnetic flux density of the magnetic flux from the rotor core 31 toward the rear tooth 23B is 1.35 T at a portion P2 on the tooth 23B. In the induction motor 10B, an ordinary material is used, and therefore the saturation magnetic flux density is lower than in the case of using a high Bs material. Therefore, the magnetic flux density becomes saturated at 2.04 T at the portion P1, and the magnetic flux density is lower and the contribution of the magnetic flux density to the torque is smaller than in the case of using a high Bs material. Note that a part of the magnetic flux enters the rear tooth 23B. As a result of small contribution of the magnetic flux density to the torque, in the induction motor 10, the first comparison point Pc1 illustrated in FIG. 18 is out of the range preferable for implementation of the slot 35B.

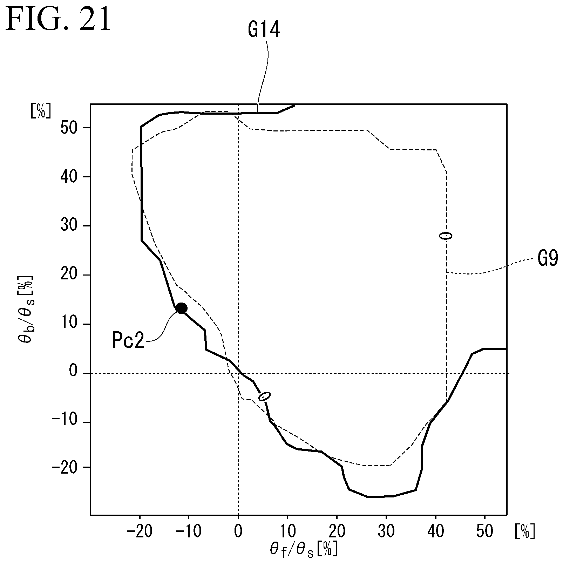

Next, the increase range of torque by the induction motor 10A and the induction motor 15A in which the slot 35A illustrated in FIG. 6 is used will be described with reference to FIGS. 21 to 23.

FIG. 21 is a graph, like FIG. 18, obtained by superimposing the graph of FIG. 16 and the graph of FIG. 17. As illustrated in FIG. 21, a second comparison point Pc2 is defined as a point at which the torque by the slot 35A is compared between the induction motor 10A and the induction motor 15A. The second comparison point Pc2 is included in the range preferable for implementation of the slot 35A illustrated in FIG. 6 in the graph G14 of the induction motor 15A. Meanwhile, the second comparison point Pc2 is out of the range preferable for implementation of the slot 35A in the graph G9 of the induction motor 10A.

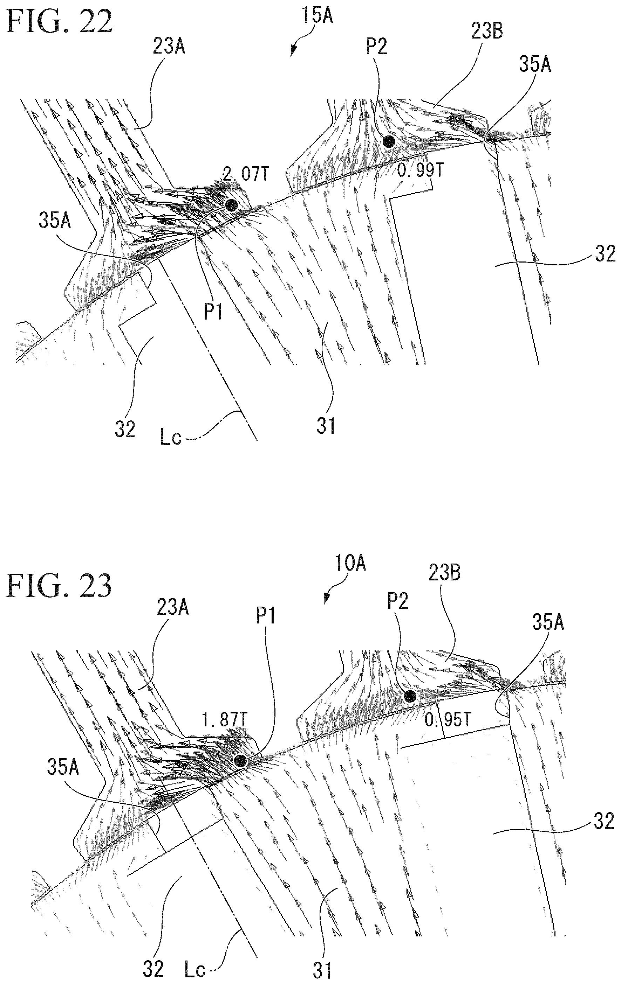

FIG. 22 illustrates an analysis result of the induction motor 15A (Second Embodiment) at the second comparison point Pc2, and FIG. 23 illustrates an analysis result of the induction motor 10A (First Embodiment) at the second comparison point Pc2. The magnetic fluxes (arrows) illustrated in FIGS. 22 and 23 are based on results of simulation by software.

FIGS. 22 and 23 illustrate the magnetic flux density in each of two teeth 23 and the flow of the magnetic flux from the rotor core 31 to each of the teeth 23 in the induction motors 15A and 10A, respectively. Hereinafter, these two teeth 23 are referred to as the teeth 23A and 23B in order from the front for explanation.

As illustrated in FIG. 22, in the induction motor 15A, the magnetic flux density of the magnetic flux from the rotor core 31 toward the front tooth 23A is 2.07 T at a portion P1 on the tooth 23A. The magnetic flux density of the magnetic flux from the rotor core 31 toward the rear tooth 23B is 0.99 T at a portion P2 on the tooth 23B. In the induction motor 15A, a high Bs material is used, and therefore the saturation magnetic flux density is high. Therefore, the magnetic flux density is increased at the portion P1, and the contribution of the magnetic flux density to the torque is increased. Thus, in the induction motor 15A, the second comparison point Pc2 illustrated in FIG. 21 is included in the range preferable for implementation of the slot 35A.

As illustrated in FIG. 23, in the induction motor 10A, the magnetic flux density of the magnetic flux from the rotor core 31 toward the front tooth 23A is 1.87 T at a portion P1 on the tooth 23A. The magnetic flux density of the magnetic flux from the rotor core 31 toward the rear tooth 23B is 0.95 T at a portion P2 on the tooth 23B. In the induction motor 10A, an ordinary material is used, and therefore the saturation magnetic flux density is lower than in the case of using a high Bs material. Therefore, the magnetic flux density becomes saturated at 1.87 T at the portion P1, and the magnetic flux density is lower and the contribution of the magnetic flux density to the torque is smaller than in the case of using a high Bs material. Note that a part of the magnetic flux enters the rear tooth 23B. As a result of small contribution of the magnetic flux density to the torque, in the induction motor 10A, the second comparison point Pc2 illustrated in FIG. 21 is out of the range preferable for implementation of the slot 35A.

Note that the technical scope of the present invention is not limited only to the above-described embodiment, and various modification can be made without departing from the gist of the present invention.

In the above-described embodiment, the slot rear end surface 36 and the slot front end surface 37 are parallel (the shapes are symmetrical with respect to the reference line Lc), and the positions of the slot rear end surface 36 and the slot front end surface 37 in the circumferential direction are asymmetrical in the circumferential direction with respect to the reference line Lc. The position of the slot rear end surface 36 in the circumferential direction is an end portion of the slot rear end surface 36 on the outside in the radial direction (rotation rear end portion 36a). The position of the slot front end surface 37 in the circumferential direction is an end portion of the slot front end surface 37 on the outside in the radial direction (rotation front end portion 37a). However, the present invention is not limited to this, and the pair of end surfaces are to be asymmetrical in the circumferential direction with respect to the reference line. The case where the pair of end surfaces are asymmetrical in the circumferential direction with respect to the reference line refers to not only a case where both the shapes and the positions in the circumferential direction are asymmetrical with respect to the reference line Lc between the slot rear end surface 36 and the slot front end surface 37, but also a case where the shapes or the positions in the circumferential direction are asymmetrical with respect to the reference line Lc between the slot rear end surface 36 and the slot front end surface 37. For example, the slot rear end surface 36 and the slot front end surface 37 may be not parallel. In this case, the slot rear end surface 36 and the slot front end surface 37 are preferably formed so that the positions in the circumferential direction of the rotation rear end portion 36a of the slot rear end surface 36 and the rotation front end portion 37a of the slot front end surface 37 are asymmetrical in the circumferential direction with respect to the reference line Lc. From the viewpoint of improving the torque, the shapes of the slot rear end surface 36 and the slot front end surface 37 are preferably symmetrical with respect to the reference line Lc, and the positions in the circumferential direction are preferably asymmetrical with respect to the reference line Lc.

The shape of the slot 35 is not limited only to the forms described in the above-described embodiment. For example, in a case where the rear end of the slot 35 protrudes rearward with respect to the secondary conductor 32, the rear end of the slot 35 may extend inward in the radial direction, and may be positioned inward in the radial direction from the outer end portion 32e of the secondary conductor 32. In a case where the front end of the slot 35 protrudes forward with respect to the secondary conductor 32, the front end of the slot 35 may extend inward in the radial direction, and may be positioned inward in the radial direction from the outer end portion 32e of the secondary conductor 32.

The shape of the stator 20 is not limited only to the forms described in the above-described embodiment. Specifically, the dimensions of the outer diameter and the inner diameter of the stator core 21, the stacking thickness, the number of slots, the dimensional proportion between the circumferential direction and the radial direction of the tooth 23, the dimensional proportion between the tooth 23 and the core back 22 in the radial direction, and the like can be arbitrarily designed according to desired characteristics of the induction motor 10.

The shape of the rotor 30 is not limited only to the forms described in the above-described embodiment. Specifically, the dimensions of the outer diameter and the inner diameter of the rotor core 31, the stacking thickness, the number of poles, and the like can be arbitrarily designed according to desired characteristics of the induction motor 10.

In the above-described embodiment, both the stator core 21 and the rotor core 31 are laminated cores, but may be not laminated cores.

In addition, a component in the above-described embodiment can be appropriately replaced with a well-known component without departing from the gist of the present invention, and the above-described modification examples may be appropriately combined with each other.

### INDUSTRIAL APPLICABILITY

According to the present invention, torque can be improved by changing the slot shape. Therefore, industrial applicability is large.

### REFERENCE SIGNS LIST

10, 10A, 10B, 15A, 15B Induction motor
20 Stator
21 Stator core
22 Core back
23, 23A, 23B, 23C, 23D Tooth
24 Stator slot
30 Rotor
31 Rotor core
32 Secondary conductor
32a First side surface
32b First outside end portion
32c Second side surface
32d Second outside end portion
32e Outer end portion
34 Insertion hole
35, 35A, 35B Slot
36 Slot rear end surface
37 Slot front end surface
36a Rotation rear end portion
37a Rotation front end portion
41 First support portion
42 Second support portion
50 Case
60 Rotary shaft
100 Laminated core
F Front
Lc Reference line
O Central axis (rotor center axis)
Pf Front reference location (rotation front reference location)
Pr Rear reference location (rotation rear reference location)
R Rear
θ1 to 04, θb, θf Separation angle

## Claims

1. A rotor comprising:
a rotor core; and
a plurality of secondary conductors disposed in the rotor core at an interval in a circumferential direction of the rotor core, wherein:
the rotor core including a plurality of insertion holes formed so as to penetrate the rotor core in an axial direction of the rotor core, the insertion holes into which the secondary conductors are inserted,
the rotor core including a slot provided outside each of the secondary conductors in a radial direction of the rotor core, the slot open to an outside in the radial direction,
each of the secondary conductors exposed to the outside in the radial direction through the slot,
the rotor core including a pair of end surfaces provided so as to face each other with the slot interposed between the pair of end surfaces in the circumferential direction; and
at least one of each of the secondary conductors or each of the insertion holes has a shape symmetrical in the circumferential direction with respect to a reference line defined so as to intersect a center axis of the rotor core and pass through a center of each of the secondary conductors in the circumferential direction, and
the pair of end surfaces are asymmetrical in the circumferential direction with respect to the reference line.

2. A rotor core for an induction motor, the rotor core comprising:
a plurality of insertion holes formed so as to penetrate the rotor core in an axial direction of the rotor core, the insertion holes into which a secondary conductor is inserted;
a slot provided in a portion positioned outside each of the insertion holes in a radial direction of the rotor core, the slot open to an outside in the radial direction of the rotor core; and
a pair of end surfaces provided so as to face each other with the slot interposed between the pair of end surfaces in a circumferential direction of the rotor core,
each of the insertion holes being symmetrical in the circumferential direction with respect to a reference line defined so as to intersect a center axis of the rotor core and pass through a center of each of the insertion holes in the circumferential direction,
the pair of end surfaces being asymmetrical in the circumferential direction with respect to the reference line.

3. An induction motor comprising:
a stator being annular; and
the rotor according to claim 1 disposed in the stator.

4. The induction motor according to claim 3, wherein
θf satisfies 0 ≤ θf ≤ 0.45θs,
θb satisfies -0.8θf ≤ θb < 0 when θf satisfies 0 ≤ θf ≤ 0.25θs, and θb satisfies θf - 0.45θs ≤ θb < 0 when θf satisfies 0.25θs < θf ≤ 0.45θs wherein
θf represents a separation angle of a rotation front end portion of the slot with respect to a rotation front reference location of each of the secondary conductors toward a rotation front,
θb represents a separation angle of a rotation rear end portion of the slot with respect to a rotation rear reference location of each of the secondary conductors toward a rotation rear,
the rotation front reference location is a point where a straight line intersects an outer circumference circle of the rotor core, the straight line that bisects a central angle formed by the reference line with a straight line intersecting the center axis and passing through an end portion of a side surface of each of the secondary conductors on a rotation front side on an outside in a radial direction, and intersects the center axis of the rotor core,
the rotation front end portion is an end portion of an end surface of the pair of end surfaces on a rotation front side on an outside in a radial direction,
the rotation rear reference location is a point where a straight line intersects the outer circumference circle of the rotor core, the straight line that bisects a central angle formed by the reference line with a straight line intersecting the center axis and passing through an end portion of a side surface of each of the secondary conductors on a rotation rear side on an outside in a radial direction, and intersects the center axis of the rotor core,
the rotation rear end portion is an end portion of an end surface of the pair of end surfaces on a rotation rear side on an outside in a radial direction, and
θs satisfies θs = 360 [deg]/Nslot wherein Nslot means a number of slots of the stator.

5. The induction motor according to claim 3, wherein
θb satisfies 0 ≤ θb ≤ 0.5θs,
θf satisfies -0.45θb ≤ θf ≤ 0 when θb satisfies 0 ≤ θb < 0.45θs, and θf satisfies 4θb - 2θs ≤ θf ≤ 0 when θb satisfies 0.45θs ≤ θb ≤ 0.5θs wherein
θf represents a separation angle of a rotation front end portion of the slot with respect to a rotation front reference location of each of the secondary conductors toward a rotation front,
θb represents a separation angle of a rotation rear end portion of the slot with respect to a rotation rear reference location of each of the secondary conductors toward a rotation rear,
the rotation front reference location is a point where a straight line intersects an outer circumference circle of the rotor core, the straight line that bisects a central angle formed by the reference line with a straight line intersecting the center axis and passing through an end portion of a side surface of each of the secondary conductors on a rotation front side on an outside in a radial direction, and intersects the center axis of the rotor core,
the rotation front end portion is an end portion of an end surface of the pair of end surfaces on a rotation front side on an outside in a radial direction,
the rotation rear reference location is a point where a straight line intersects the outer circumference circle of the rotor core, the straight line that bisects a central angle formed by the reference line with a straight line intersecting the center axis and passing through an end portion of a side surface of each of the secondary conductors on a rotation rear side on an outside in a radial direction, and intersects the center axis of the rotor core,
the rotation rear end portion is an end portion of an end surface of the pair of end surfaces on a rotation rear side on an outside in a radial direction, and
θs satisfies θs = 360 [deg]/Nslot wherein Nslot means a number of slots of the stator.

6. The induction motor according to claim 3, wherein
θf satisfies 0 ≤ θf ≤ 0.450s,
θb satisfies -0.80f ≤ θb when θf satisfies 0 ≤ θf ≤ 0.25θs, θb satisfies -0.25θs ≤ θb when θf satisfies 0.250s < θf ≤ 0.35θs, and θb satisfies 2θf - 0.9θs ≤ θb when θf satisfies 0.350s < θf ≤ 0.450s wherein
θf represents a separation angle of a rotation front end portion of the slot with respect to a rotation front reference location of each of the secondary conductors toward a rotation front,
θb represents a separation angle of a rotation rear end portion of the slot with respect to a rotation rear reference location of each of the secondary conductors toward a rotation rear,
the rotation front reference location is a point where a straight line intersects an outer circumference circle of the rotor core, the straight line that bisects a central angle formed by the reference line with a straight line intersecting the center axis and passing through an end portion of a side surface of each of the secondary conductors on a rotation front side on an outside in a radial direction, and intersects the center axis of the rotor core,
the rotation front end portion is an end portion of an end surface of the pair of end surfaces on a rotation front side on an outside in a radial direction,
the rotation rear reference location is a point where a straight line intersects the outer circumference circle of the rotor core, the straight line that bisects a central angle formed by the reference line with a straight line intersecting the center axis and passing through an end portion of a side surface of each of the secondary conductors on a rotation rear side on an outside in a radial direction, and intersects the center axis of the rotor core,
the rotation rear end portion is an end portion of an end surface of the pair of end surfaces on a rotation rear side on an outside in a radial direction, and
θs satisfies θs = 360 [deg]/Nslot wherein Nslot means a number of slots of the stator.

7. The induction motor according to claim 3, wherein
θb satisfies 0 ≤ θb ≤ 0.50s,
θf satisfies -0.8θb ≤ θf when θb satisfies 0 ≤ θb ≤ 0.25θs, and θf satisfies -0.20s ≤ θf when θb satisfies 0.25θs < θb ≤ 0.50s wherein
θf represents a separation angle of a rotation front end portion of the slot with respect to a rotation front reference location of each of the secondary conductors toward a rotation front,
θb represents a separation angle of a rotation rear end portion of the slot with respect to a rotation rear reference location of each of the secondary conductors toward a rotation rear,
the rotation front reference location is a point where a straight line intersects an outer circumference circle of the rotor core, the straight line that bisects a central angle formed by the reference line with a straight line intersecting the center axis and passing through an end portion of a side surface of each of the secondary conductors on a rotation front side on an outside in a radial direction, and intersects the center axis of the rotor core,
the rotation front end portion is an end portion of an end surface of the pair of end surfaces on a rotation front side on an outside in a radial direction,
the rotation rear reference location is a point where a straight line intersects the outer circumference circle of the rotor core, the straight line that bisects a central angle formed by the reference line with a straight line intersecting the center axis and passing through an end portion of a side surface of each of the secondary conductors on a rotation rear side on an outside in a radial direction, and intersects the center axis of the rotor core,
the rotation rear end portion is an end portion of an end surface of the pair of end surfaces on a rotation rear side on an outside in a radial direction, and
θs satisfies θs = 360 [deg]/Nslot wherein Nslot means a number of slots of the stator.

8. A method of designing the induction motor according to any one of claims 3 to 7, the method comprising:
calculating a magnetic flux in the induction motor according to positions of the pair of end surfaces, a number of stator slots formed in the stator, and a number of the secondary conductors, and designing the induction motor on a basis of a calculation result.
